Europäisches Patentamt

European Patent Office

Office européen des brevets

(19)

(11) **EP 1 252 722 B1**

(12) **FASCICULE DE BREVET EUROPEEN**

(45) Date de publication et mention
de la délivrance du brevet:
**23.06.2004 Bulletin 2004/26**

(21) Numéro de dépôt: **01904001.3**

(22) Date de dépôt: **30.01.2001**

(51) Int Cl.⁷: **H04B 1/707**

(86) Numéro de dépôt international:
**PCT/FR2001/000284**

(87) Numéro de publication internationale:
**WO 2001/058037 (09.08.2001 Gazette 2001/32)**

(54) **PROCEDE DE RADIOCOMMUNICATIONS AMRC AVEC CODES D'ACCES ET RECEPTEUR CORRESPONDANT**

CDMA-FUNKÜBERTRAGUNGSVERFAHREN MIT ZUGRIFFSKODES UND EMPFÄNGER DAFÜR

CDMA RADIOCOMMUNICATION METHOD WITH ACCESS CODES AND CORRESPONDING RECEIVER

(84) Etats contractants désignés:
**DE GB IT**

(30) Priorité: **31.01.2000 FR 0001184**

(43) Date de publication de la demande:
**30.10.2002 Bulletin 2002/44**

(73) Titulaire: **COMMISSARIAT A L'ENERGIE ATOMIQUE**
**75752 Paris Cédex 15 (FR)**

(72) Inventeurs:
• **OUVRY, Laurent**
**F-38100 Grenoble (FR)**
• **BARLETTA, Julien**
**F-38000 Grenoble (FR)**
• **BOUVIER DES NOES, Mathieu**
**F-38000 Grenoble (FR)**
• **LATTARD, Didier**
**F-38680 Rencurel (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 917 308**    **US-A- 5 414 728**

## Description

### Domaine technique

La présente invention a pour objet un procédé de radiocommunications AMRC (Accès Multiple à Répartition par les codes, ou CDMA en anglais pour "Code Division Multiple Access") utilisant des codes d'accès et un récepteur correspondant.

Elle trouve une application en télécommunications, notamment dans la téléphonie par satellite géostationnaire, sur réseaux câblés, sur boucle locale sans fil, etc....

### Etat de la technique antérieure

Le procédé de l'invention utilise la technique d'étalement de spectre par séquence directe (ESSD en abrégé). L'ESSD consiste à moduler chaque symbole du signal numérique à transmettre par une séquence binaire pseudo-aléatoire. Une telle séquence est composée de N impulsions ou "chips" dont la durée Tc est égale à Ts/N où Ts est la durée du symbole. Le signal modulé présente un spectre qui s'étale sur une plage N fois plus large que celui du signal original. A la réception, la démodulation consiste à corréler le signal avec la séquence utilisée à l'émission, ce qui permet de retrouver l'information liée au symbole de départ.

Cette technique permet un accès multiple par affectation de différentes séquences à différents utilisateurs. Ainsi, la technique AMRC (CDMA) consiste en l'émission simultanée, dans une même bande, de plusieurs signaux étalés utilisant des séquences pseudo-aléatoires d'étalement différentes. Les séquences sont choisies de façon que les intercorrélations restent faibles.

L'un des problèmes posés par cette technique est de permettre à de nouveaux utilisateurs d'accéder au réseau, alors que celui-ci est déjà occupé par des utilisateurs en cours de communication. En particulier, il est intéressant d'avoir simultanément dans la même bande de fréquence des utilisateurs en cours de communication et des nouveaux accédants. L'une des techniques utilisées, décrite par exemple dans le document WO 97/08861, consiste à interrompre l'émission de signaux de trafic pendant certaines tranches de temps et à utiliser ces tranches pour traiter les demandes d'accès.

Cette solution n'est guère satisfaisante car elle diminue la capacité globale du système. En effet, dans certains cas, des plages de temps réservées aux nouveaux arrivants restent vides. La présente invention a justement pour but de remédier à cet inconvénient.

### Exposé de l'invention

A cette fin, l'invention propose un procédé ne nécessitant pas l'interruption des communications. Il n'y a donc plus de diminution a priori de la capacité du système. Ce but est atteint par l'utilisation de codes spécialemen: affectés à l'accès, en concomitance avec les codes affectés à l'information (codes de trafic) ou à diverses commandes.

De manière plus précise, la présente invention a pour objet un procédé de radiocommunications du type à accès multiple à répartition par les codes (AMRC) dans lequel :

- on utilise des codes dits de trafic constitués de séquences d'impulsions ayant un certain rythme, ces codes étant propres aux différents utilisateurs du système, on module ces codes par les informations que chaque utilisateur doit transmettre, et on émet les codes modulés,
- on reçoit le signal correspondant à tous les codes modulés émis, on effectue une corrélation adaptée aux différents codes, on démodule le signal de corrélation et on restitue les informations transmises,

ce procédé étant caractérisé en ce que, pour permettre à un nouvel utilisateur d'utiliser le procédé :

- on émet un code particulier prédéterminé, dit code d'accès, propre à ce nouvel utilisateur, ce code étant constitué d'une séquence d'impulsions ayant le même rythme que les séquences des codes de trafic, ce code d'accès étant modulé par une suite particulière de symboles,
- dans le signal reçu, on recherche la présence éventuelle de ces codes d'accès prédéterminés et, en cas de présence d'un tel code, on identifie l'utilisateur et on l'autorise à communiquer.

Le code d'accès n'est pas synchrone a priori des codes de trafic.

De préférence :

- à l'émission, la modulation pour la transmission d'informations est une modulation de phase à quatre états (QPSK), le signal modulé possédant deux composantes (I,Q) dont l'une (I) est en phase avec une porteuse et l'autre (Q) est en quadrature de phase avec la porteuse,

- à la réception, on effectue la corrélation sur deux composantes (I, Q) respectivement en phase et en quadrature de phase et on produit deux signaux de corrélation correspondants.

De préférence encore, dans cette variante :

- à l'émission, les codes d'accès sont modulés par une suite de symboles dont les phases sont décalées les unes des autres de k.90°, où k est égal à 0, 1, 2 ou 3,
- à la réception, pour rechercher la présence d'un code d'accès on effectue une multiplication retardée conjuguée de deux signaux de corrélation pour obtenir un signal complexe ayant une composante réelle et une composante imaginaire, et l'on recherche la présence, sur une durée égale à la durée d'un symbole, d'un pic positif ou négatif, dans au moins l'une des composantes réelle et imaginaire.

La présence de ces séquences pseudo-aléatoires supplémentaires liées aux codes d'accès peut entraîner une perturbation des séquences liées au trafic par des phénomènes d'interférences entre codes. La présente invention prévoit alors que l'on corrige chaque signal de corrélation correspondant à un code de trafic pour tenir compte de l'interférence entre ce code de trafic et l'ensemble des codes d'accès présents. :

La présente invention a également pour objet un récepteur de type AMRC dont la caractéristique essentielle est de comprendre des moyens aptes à détecter la présence de codes d'accès dans le signal de réception.

De préférence, ce récepteur comprend encore des moyens de correction des interférences entre codes d'accès et codes de trafic.

**Brève description des dessins**

- la figure 1 est un chronogramme simplifié montrant la répartition des codes de trafic et des codes d'accès ;
- la figure 2 illustre un premier mode de réalisation des moyens de détection des codes d'accès ;
- la figure 3 illustre un second mode de réalisation des moyens de détection des codes d'accès ;
- la figure 4 montre l'allure générale du signal filtré lié aux accès ;
- la figure 5 montre l'origine de diverses interférences entre codes ;
- la figure 6 montre le décalage de la constellation des signaux en raison de la présence de codes d'accès ;
- la figure 7 illustre schématiquement un récepteur avec correction de l'interférence due aux codes d'accès par filtrage passe-haut ;
- la figure 8 illustre un mode particulier de réalisation du filtre passe-haut.
- la figure 9 montre un circuit de multiplication retardée conjuguée ;
- la figure 10 illustre un mode de réalisation avec 4 tests sur 4 types de codes d'accès.

**Description de modes particuliers de réalisation**

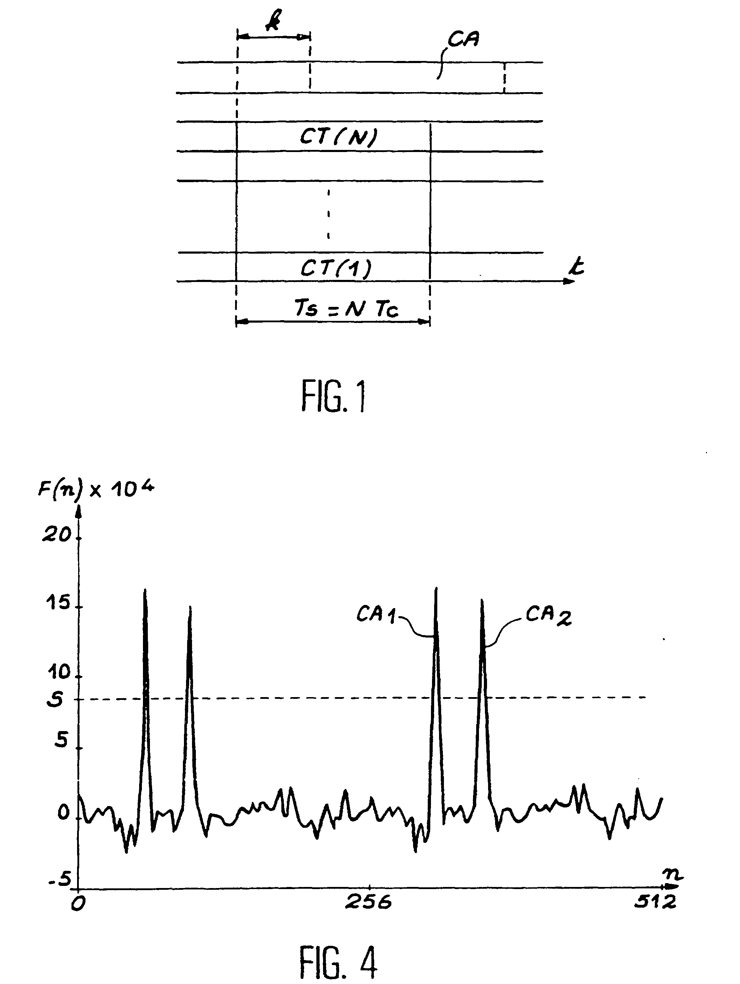

La figure 1 est un chronogramme montrant, de manière schématique, dans une période symbole de durée Ts, une pluralité de codes de trafic CT(1), ..., CT(N) dédiés à N utilisateurs et un code d'accès CA, non nécessairement synchrone des codes de trafic mais décalé de kTc où Tc est la durée d'une impulsion de la séquence ("chip") avec $0 \leq k \leq N-1$. Ce code d'accès peut avoir, lui aussi une longueur NTc, mais pas nécessairement.

Tous ces codes sont émis en concomitance, avec cette différence que les codes de trafic véhiculent des informations (comprenant, entre autres, les données à transmettre) alors que les codes d'accès ne véhiculent pas de données proprement dites. Du point de vue électronique, cela signifie que les codes de trafic sont modulés par les données à transmettre tandis que les codes d'accès ne le sont pas.

Le récepteur doit être apte à détecter les codes de trafic et à les traiter, ce qui est bien connu de l'homme de métier, mais apte aussi à détecter les codes d'accès, ce qui est propre à l'invention. Seuls les moyens relatifs au traitement des codes d'accès seront décrits par la suite puisque les moyens de traitement des codes de trafic sont largement connus. On rappelle simplement qu'ils utilisent des filtres adaptés et/ou des corrélateurs, des démodulateurs, des circuits de décision et des moyens de récupération du signal d'horloge.

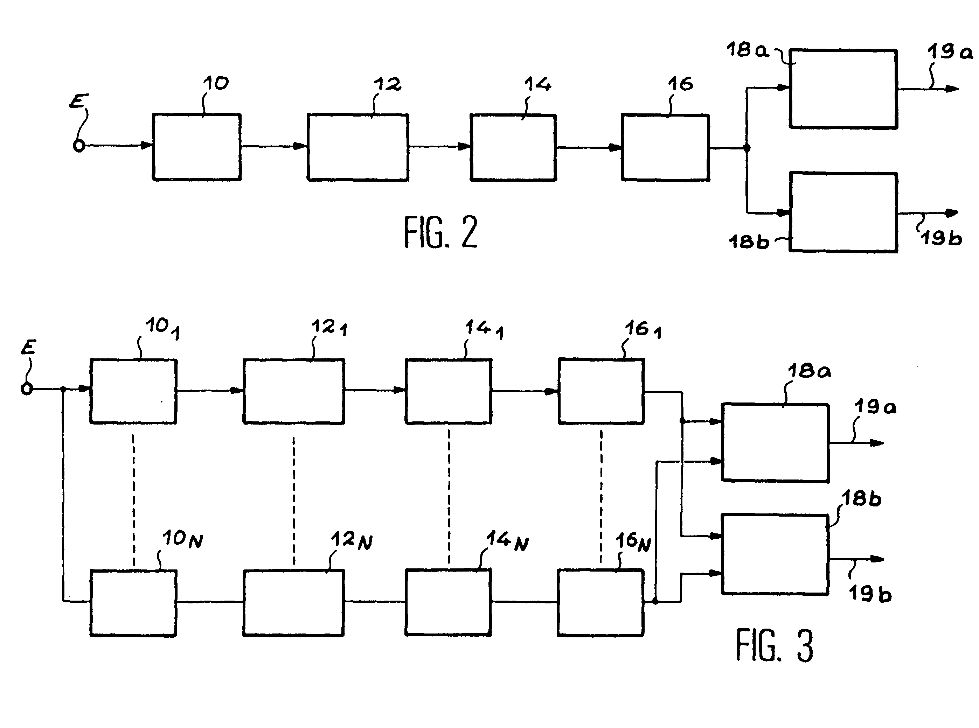

S'agissant des moyens de traitement des codes d'accès, deux modes particuliers de réalisation sont illustrés sur les figures 2 et 3.

Les moyens représentés sur la figure 2 comprennent :

- une entrée générale E,
- un filtre 10 adapté au code d'accès,
- un moyen 12 pour effectuer une multiplication retardée conjuguée,
- un circuit 14 pour extraire la composante (ou partie) réelle du signal délivré par le moyen précédent,
- un filtre numérique 16,
- des moyens 18a pour détecter le dépassement, par le signal filtré, d'un seuil prédéterminé et des moyens 18b pour compter le nombre de dépassements dans une fenêtre temporelle de durée égale à la durée Ts des symboles d'information transmis ; ces deux moyens possèdent des sorties 19a et 19b.

Pour comprendre le fonctionnement de cette voie de traitement, la forme des signaux émis et reçus va être explicitée. Le signal émis en bande de base s'écrit :

$$s_a(t) = \sum_i \sum_{j=0}^{N-1} c_a(j)p(t - jT_c - iNT_c)$$

où p(t) est la forme de l'impulsion ("chip"), Tc la durée de cette impulsion, Ca(j) est le code d'accès par exemple de longueur N, avec j=0, 1, ..., N-1.

Le signal reçu sur l'entrée E est constitué de un ou plusieurs codes d'accès de même nature. Le canal radioélectrique introduit éventuellement un déphasage, un effet Doppler (peu considéré ici), des trajets multiples (non considéré ici), des retards, ... Le signal d'entrée s'écrit (en faisant abstraction des composantes dues au trafic et au bruit) :

$$r(t) = \sum_{a=1}^{Ka} s_a(t - \tau_a)e^{j\varphi_a(t)} \quad avec \quad s_a(t) = \sum_{j=0}^{N_a-1} c_{a,j}p(t - jTc)$$

où Ka est le nombre de codes d'accès utilisés et Na est la longueur des codes d'accès. Les retards $\tau_a$ sont supposés constants, la variation de $\varphi_a$ dans le temps est supposée faible devant Ts. Le temps d'acquisition est grand devant Ts de sorte que les variations de Ka sont lentes devant Ts.

Dans les systèmes numériques, le signal reçu est échantillonné et numérisé à une cadence $\frac{1}{Te}$ multiple de la fréquence $\frac{1}{Tc}$ soit Te = $\frac{Tc}{E}$. On peut choisir E=1, ce qui revient à ne considérer qu'un seul échantillon par impulsion. L'invention s'applique quelle que soit la valeur de E, mais la formulation mathématique est moins lourde avec l'hypothèse E=1 qui sera retenue par la suite.

Le filtre 10 adapté au code d'accès est classiquement un filtre à réponse impulsionnelle finie (RIF) de réponse impulsionnelle :

$$h_{mf}(t) = \sum_{j=0}^{N-1} c_a(j)\delta(t - jT_c)$$

ou, en numérique, avec E=1 :

$$h_{mf}(n) = \sum_{j=0}^{N-1} c_a(j)\delta(n - j) .$$

Le signal après filtrage adapté s'écrit :

$$C(t) = r(t) * h_{mf}(t)$$

La multiplication retardée conjuguée effectuée par le circuit 12 réalise sur le signal C l'opération non linéaire :

$$D(t)=C(t)xC^*(t-Ts)$$

ou, en numérique, avec E=1 :

$$D(n) = C(n)xC^*(n - N).$$

L'information recherchée peut, dans certains cas, se trouver dans la partie réelle du signal (propriété du code non modulé). C'est le rôle du circuit 14 de délivrer cette partie réelle :

$$E(t) = Re(D(t)) \text{ ou, en numérique, } E(n) = Re(D(n)) .$$

Le filtre 16 peut être constitué d'une batterie de filtres numériques passe-bas qui combinent les échantillons distants d'une période symbole. Sa fonction de transfert en z peut, par exemple, être :

$$H_{lpf} (z) = \frac{1}{1-cz^{-N}}.$$

Le signal filtré est alors :

$$F(n) = E(n) * h_{lpf} (n).$$

Le détecteur à seuil 18a compare le signal F(n) avec un seuil S prédéfini et compte le nombre de dépassements de ce seuil dans des fenêtres consécutives de durée Ts. On observera que, si le nombre d'échantillons pris par impulsion est supérieur à 1 (E>1), il faut ne compter qu'un seul dépassement par période chip. Un dépassement est donc validé si, par exemple :

$$F(n)>S \text{ et } \qquad F(n)>F(n-1)$$

$$F(n)>F(n+1)$$

La figure 3 montre un autre mode de réalisation des moyens de détection des codes d'accès. Le circuit représenté comprend :

- une entrée générale E,
- une batterie de N corrélateurs $10_1$, ..., $10_n$ adaptés au code d'accès recherché et décalés l'un par rapport à l'autre d'une durée égale à la durée Tc d'une impulsion des séquences constituant les codes d'accès,
- connectés à la sortie de chaque corrélateur :

  - un moyen $12_1$, ..., $12_N$ pour effectuer une multiplication retardée conjuguée,
  - un circuit $14_1$, ..., $14_N$ pour extraire la composante (ou partie) réelle du signal délivré par le moyen précédent (toujours dans le cas où l'on ne traite que la composante réelle),
  - un filtre numérique $16_1$, ..., $16_N$, de préférence passe-bas,

- un moyen 18a relié à tous les filtres numériques et apte à détecter le dépassement, par le signal filtré, d'un seuil prédéterminé ou calculé au fur et à mesure de façon adaptative (automatique) et un moyen 18b pour compter les nombres de dépassements dans une fenêtre temporelle de durée égale à la durée Ts des symboles d'information transmis.

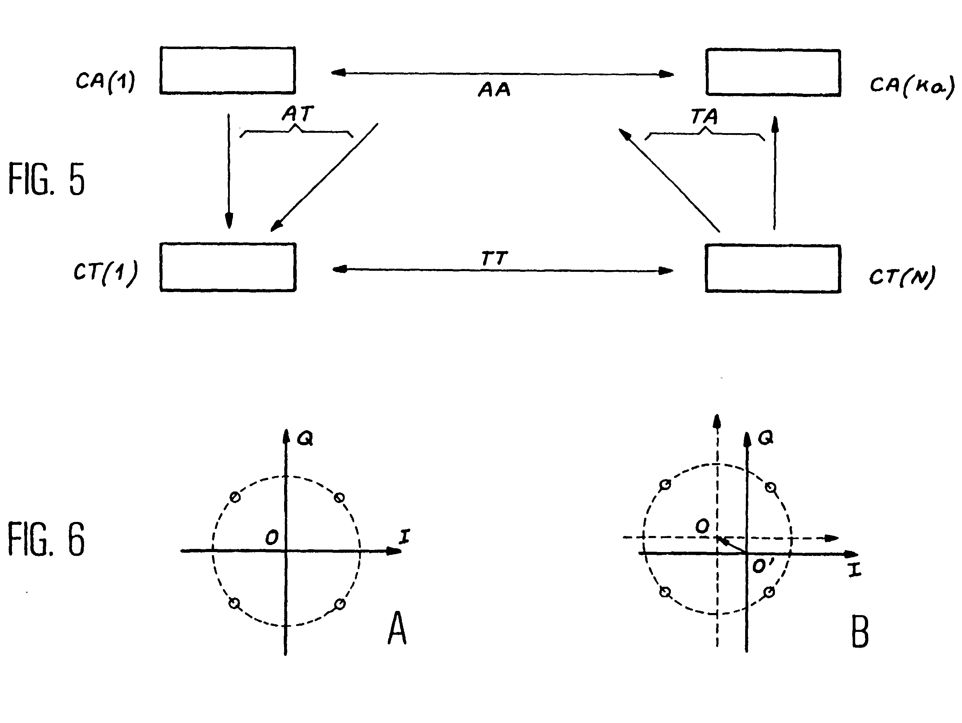

Le signal F(n) peut présenter une allure telle que celle qui est illustrée sur la figure 4. En abscisses figure le rang de l'échantillon n (supposé aller de 0 à 512). Dans l'exemple pris N=32, E=8, Ts=NxE+256. L'ordonnée est l'amplitude de F(n) en unité arbitraire. S désigne le seuil. L'intervalle de résolution temporelle, qui correspond à la largeur des pics, est de l'ordre de 8 échantillons. Si l'on veut connaître le nombre de pics d'accès, il ne faut donc pas se contenter de compter le nombre de dépassements du seuil S, mais bien appliquer une règle tenant compte de la largeur de cet intervalle.

On voit ainsi, sur la figure 4, deux pics CA1, CA2 dans chaque fenêtre, correspondant à la détection de deux codes d'accès.

Le détecteur de pic principal 18a des figures 2 et 3 cherche donc le ou les pics de plus forte amplitude dans une fenêtre de durée Ts et renvoie la valeur $n_{max}$ correspondante. Cette valeur indique le décalage entre l'accès et une référence fixe pour l'horloge symbole en réception.

L'utilisation de codes d'accès perturbe la transmission de l'information par un mécanisme dit d'interférence d'accès multiple ou "IAM" en abrégé (MAI en anglais pour "Multiple Access Interference"). La figure 5 illustre l'origine de ce phénomène. Les codes y sont représentés symboliquement par des rectangles CA(1), ..., CA(Ka) pour Ka codes d'accès et CT(1), ..., CT(N) pour N codes de trafic. L'interférence d'accès multiple entre codes de trafic, notée TT ("trafic-trafic"), est l'interférence classique dont on se débarrasse par diverses techniques connues (orthogonalité des codes, suppression série ou parallèle des interférences, etc...). L'interférence entre codes d'accès, en abrégé AA (Accès-Accès), est marginale et de toute façon n'affecte pas le trafic d'information. Les interférences entre codes d'accès et codes de trafic (AT) ou entre codes de trafic et codes d'accès (TA), sont plus difficiles à traiter parce qu'on ne sait rien a priori des codes d'accès, si bien que la correction doit s'effectuer "en aveugle". Comme les interférences TT sont en général bien compensées, les performances du système (c'est-à-dire la qualité du trafic) risquent d'être limitées par les interférences AT si on ne les réduit pas elles aussi.

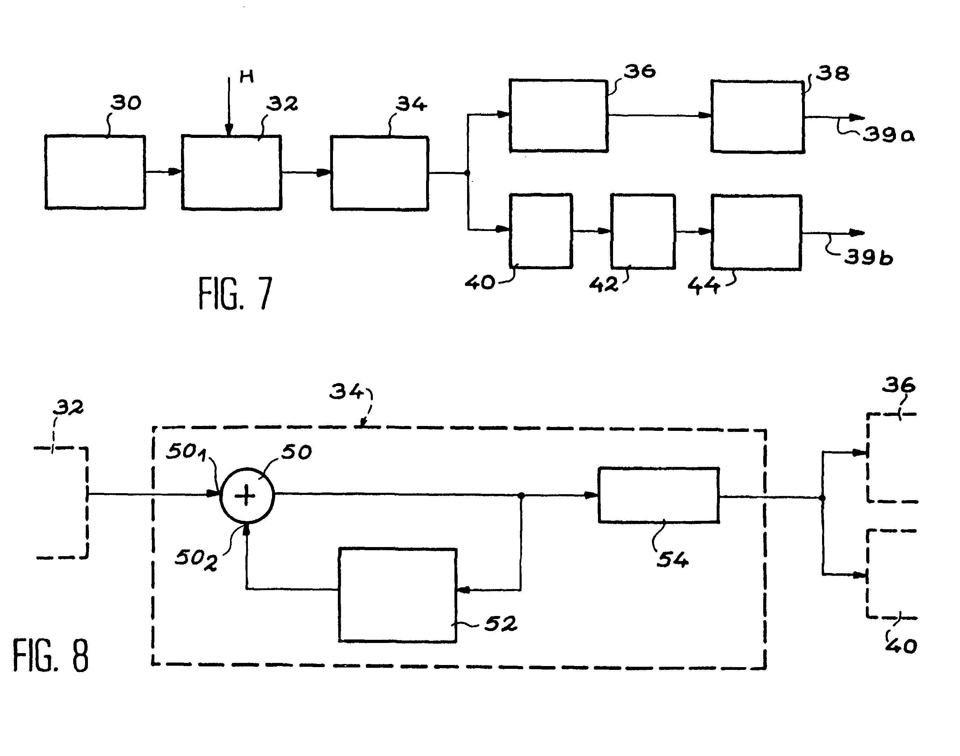

L'effet de cette interférence est illustré sur la figure 6. On suppose, dans cet exemple, que la modulation utilisée à l'émission est une modulation de phase à quatre états de phase (QPSK pour "Quaternary Phase Shift Keying"). Dans un diagramme où l'on porte sur l'axe x la composante I en phase avec la porteuse et sur l'axe y la composante Q en quadrature de phase avec cette porteuse, les quatre états possibles sont schématisés par une constellation de quatre points répartis sur un cercle centré sur l'origine 0 (partie A de la figure 6). La présence des codes d'accès se traduit par un décalage de la constellation comme illustré sur la partie B où l'on voit que les quatre points se répartissent sur un cercle qui n'est plus centré à l'intersection O' des axes I et Q. La correction consistera à ramener 0' en 0 (correction symbolisée par la flèche).

Pour préciser ce point, on va donner une formulation mathématique du signal numérique reçu (avec l'hypothèse E=1). Ce signal (sans le bruit) peut s'écrire :

$$r(n) = \sum_{a=1}^{Ka} A_a \sum_{j=0}^{Na-1} c_{a,Na-1-j} \, \delta(n-j-\tau_a) e^{j\varphi_a(n)} + \sum_{k=1}^{K} A_k d_{k,n=N-1} \sum_{j=0}^{N-1} c_{k,N-1-j} \, \delta(n-j) e^{j\varphi_k(n)}$$

Dans cette expression, le terme de gauche représente Ka accès asynchrones (avec un retard $\tau_a$) effectués avec des codes de longueur Na et le terme de droite K codes de crafic synchrones véhiculant les données $d_k$. Le système étant synchrone, on aura pris soin de choisir des codes orthogonaux, de façon à avoir une composante TT nulle. On supposera que $\varphi_k(n)$ et $\varphi_a(n)$ sont constants. Le signal corrélé avec le code de trafic numéro 1 s'écrit :

$$C(N-1) = \sum_{a=1}^{Ka} A_a \sum_{j=0}^{Na-1} \sum_{j=0}^{N-1} c_{1,N-1-j} c_{a,Na-1-j-\tau_a} e^{j\varphi_a} + \sum_{k=1}^{K} A_k d_{k,n=N-1} \sum_{j=0}^{N-1} \sum_{j=0}^{N-1} c_{1,N-1-j} e^{j\varphi_k}$$

Les codes de trafic sont choisis orthogonaux, comme dans tout système CDMA synchrone. Ainsi, le terme de droite ne contient que la contribution de l'utilisateur, et le terme de gauche ne dépend pas de l'instant considéré, parce que les codes d'accès ne véhiculent pas de données susceptibles de changer toutes les N impulsions :

$$C(N-1) = \sum_{a=1}^{Ka} A_a c_{1,a,\tau_a} e^{j\varphi_a} + A_1 d_{1,n=N-1}(e^{j\varphi_1})$$

Le terme de droite contient la donnée. C'est lui qui donne sa forme à la constellation. Le terme de gauche représente le décalage que l'on souhaite supprimer. Il est constitué de la somme de Ka petits décalages liés à chaque accès.

Ainsi, chaque accès introduit-il un décalage lentement variable (d'après les hypothèses formulées plus haut), qui dépend de tous les paramètres $A_a$, $K_a$, $\{c_a(j)\}_{,a}$ et des codes de trafic.

On notera que plus Ka est grand, plus la somme des décalages élémentaires est lentement variable, puisque le nombre de paramètres total augmente et que l'effet de moyennage temporel est grand. La solution proposée par l'invention fonctionnera donc tout aussi bien dans ce contexte (le filtre possède une qualité "d'adaptation" à la variation du signal).

La suppression d'une composante continue dans un signal numérique est un problème classique, mais qui ne trouve pas forcément de solution satisfaisante en termes de performances. On pourra à ce titre se référer à l'article intitulé "Low Complexity Digital DC-Offset Compensation in Cellular/pcs Mobile Communication Systems" par I. Held, R. Meyer, A. Chen, J. Huber, publié dans Proceedings of PIMRC'99, 13-15 sept. 1999, pp. 459-463. Cet article propose deux techniques : la première est une moyenne temporelle réalisée à l'aide d'un filtre de réponse impulsionnelle fini (FIR) ; la deuxième est une régression au sens des moindres carrés. Dans la présente invention, on propose une troisième technique mettant en oeuvre un filtre de réponse impulsionnelle infinie (RII). Ce filtre est placé à la sortie des corrélateurs traitant les codes de trafic comme illustré sur la figure 7. Sur cette figure, le détail des circuits n'est pas donné car ces circuits de traitement des codes de trafic sont classiques. Ces moyens comprennent de manière générale un filtre 30 adapté à la forme des impulsions des séquences, un corrélateur 32 adapté au code de trafic que l'on souhaite traiter et démoduler, un filtre de réjection des codes accès 34, dans la voie du haut un détecteur quadratique 36 et un estimateur de puissance 38, dans la voie du bas une boucle de récupération de phase (démodulation cohérente) 40 suivie d'un organe de décision 42 et éventuellement d'un décodeur différentiel 44.

Il est important de remarquer que :

- le filtre de réjection 34, lorsqu'il est placé avant la boucle de phase 40, voit une constellation qui "tourne" au cours du temps (car la phase $\varphi_k$ dépend du temps) ; mais le cercle qu'elle décrit possède toujours le même centre correspondant au décalage que l'on souhaite éliminer ; cela n'a donc pas d'influence sur la performance du traitement ;
- le filtre de réjection 34 peut être placé après la boucle de phase 40 ; mais la composante continue peut avoir des effets néfastes sur la boucle de phase ;
- le filtre de réjection 34 peut être intégré au filtre de la boucle de phase 40 .

Dans le cas de la démodulation non cohérente, la multiplication retardée est très affectée par le décalage, le filtre de réjection est d'autant plus utile ; l'estimation de puissance 38 est très affectée par le décalage, puisque l'estimation va être biaisée par la puissance de la composante continue parasite ; le filtre de réjection est donc, là encore, très utile.

Le filtre permettant de réduire les interférences dues aux accès peut être un filtre numérique passe-haut d'ordre 1 dont la fonction de transfert est :

$$H(z) = \frac{\left(\dfrac{c-1}{c}\right)\left(1 - z^{-1}\right)}{1 - \left(\dfrac{c-1}{c}\right)z^{-1}} \quad \text{avec} \quad c >> 1$$

que l'on peut écrire :

$$\frac{Kz^{-1}}{1-(1-K)z^{-1}} + \frac{(1 - K)}{1-(1-K)z^{-1}} \quad \text{avec } K=1/c \,.$$

Un exemple de filtre possible est donné figure 8. Ce filtre comprend un additionneur 50 avec deux entrées $50_1$, $50_2$, un amplificateur 52 de gain :

$$\frac{Kz^{-1}}{1-(1-K)z^{-1}}$$

la sortie de cet amplificateur étant rebouclée sur l'entrée $50_2$ de l'additionneur 50, et un amplificateur 54 de gain (1-K).

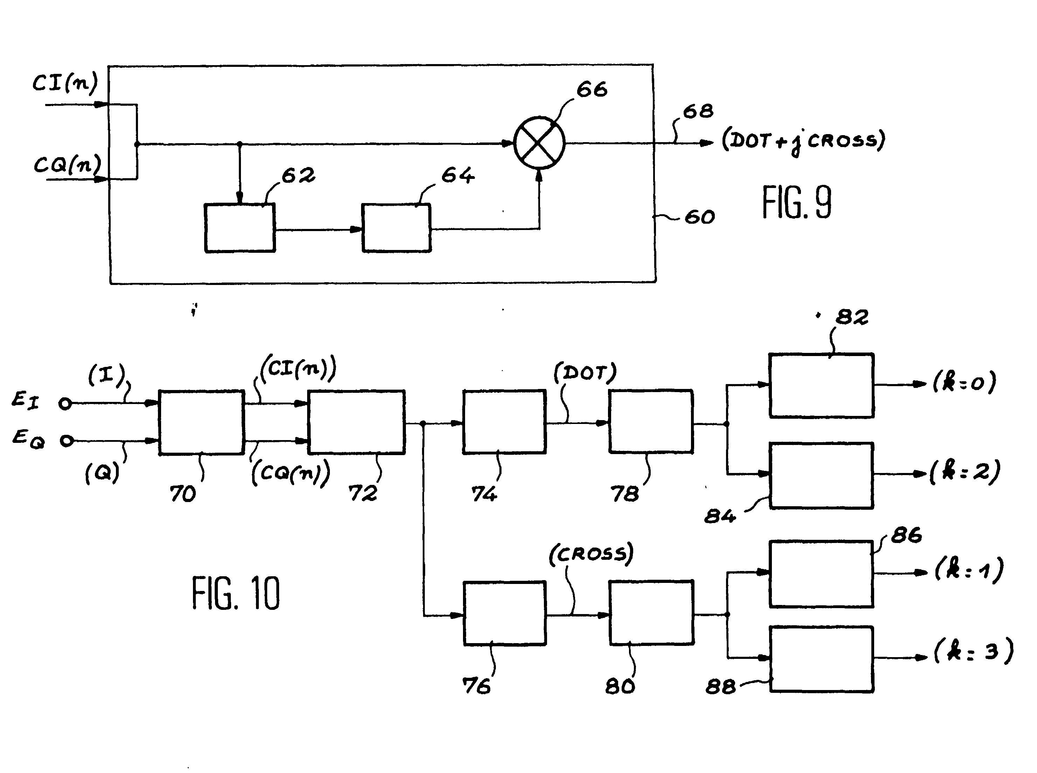

Dans la description qui précède, on a supposé que l'on ne traitait que la composante réelle (ou partie réelle) du signal délivré par le moyen apte à effectuer une multiplication retardée (c'était le rôle du moyen 14 de la figure 2 ou des moyens $14_1$, ..., $14_N$ de la figure 3 d'extraire cette composante réelle). Mais l'invention est plus générale et englobe le cas où l'on ne traite que la composante imaginaire et le cas où l'on traite les deux composantes réelle et imaginaire. Ce mode de réalisation est avantageux lorsqu'on utilise, à l'émission, une modulation de phase à quatre états, dite QPSK ("Quaternary Phase Shift Keying") pour les codes de trafic, modulation que l'on peut utiliser également pour les codes d'accès. En d'autres termes, plutôt que de moduler les codes d'accès par des suites de symboles tous identiques, on peut les moduler par des suites de symboles distants en phase de 90° et occupant donc, successivement, les quatre points d'un diagramme de constellation. Les phases successives sont alors égales à k.90°, où k prend les valeurs 0, 1, 2 ou 3. Les figures 9 et 10 illustrent ce mode de mise en oeuvre.

La figure 9, tout d'abord, illustre un exemple de mise en oeuvre d'un circuit de multiplication retardée conjuguée. Il s'agit d'un opérateur numérique non linéaire de démodulation de phase non cohérente. Ce circuit référencé 60 reçoit deux signaux de corrélation notés respectivement CI(n) et CQ(n), où I se rapporte à la composante en phase avec la porteuse et Q à la composante en quadrature, et où n représente le rang de l'échantillon. Le signal complexe CI(n)+jCQ(n) est appliqué à un circuit 62 qui réalise une opération de conjugaison et délivre donc le signal CI(n)-jCQ(n). Ce signal est appliqué à un multiplicateur 66 qui reçoit, par ailleurs, le signal d'entrée. On obtient alors, sur la sortie 68, un signal complexe noté DOT+jCROSS avec :

$$DOT=CI(n-NE)CI(n)+CQ(n-NE)CQ(n)$$

$$CROSS=CI(n-NE)CQ(n)+CI(n)CQ(n-NE)$$

Si le code d'accès est modulé par une suite de symboles distants de k.90° de symbole à symbole sur le diagramme de constellation, alors le signal en sortie du moyen de multiplication retardée conjuguée présentera un pic (éventuellement caché dans du bruit) qui sera :

- positif sur la composante réelle DOT si k=0 et négatif sur cette même composante si k=2,
- positif sur la composante imaginaire CROSS si k=1 et négatif sur cette même composante si k=3.

On peut ainsi définir quatre types différents d'accès en choisissant de manière appropriée la suite des symboles modulant le code d'acquisition. Dans le récepteur, on mettra donc en oeuvre quatre tests différents comme cela est illustré sur la figure 10. Les moyens représentés sur cette figure comprennent :

- un filtre 70 adapté au code d'accès et recevant sur deux entrées $E_1$, $E_Q$ les deux composantes en phase (I) et en quadrature de phase (Q),
- un circuit 72 de multiplication retardée conjuguée (analogue au circuit 60 de la figure 9),
- un circuit 74 d'extraction de la composante réelle du signal délivré par le circuit 72, c'est-à-dire DOT,
- en parallèle un circuit 76 d'extraction de la composante imaginaire du signal délivré par le circuit 72, c'est-à-dire CROSS,
- deux circuits de filtrage numérique 78, 80 pour diminuer le bruit,
- un circuit 82 de détection et comptage de pics positifs sur une durée symbole et recevant la composante réelle DOT filtrée,
- un circuit 84 de détection et comptage de pics négatifs sur une durée symbole et recevant lui aussi la composante réelle DOT filtrée,
- un circuit 86 de détection et comptage de pics positifs sur une durée symbole et recevant la composante imaginaire CROSS filtrée,
- enfin, un circuit 88 de détection et comptage de pics négatifs sur une durée symbole et recevant lui aussi la composante imaginaire CROSS filtrée.

Ces quatre derniers moyens correspondent aux quatre valeurs possible pour k dans l'ordre suivant :

circuit 82 : accès k = 0
circuit 84 : accès k = 2
circuit 86 : accès k = 1
circuit 88 : accès k = 3.

Si l'on compare la figure 10 avec la figure 2 où l'on ne traitait que la composante réelle avec un seul seuil, on voit qu'on a quadruplé les tests : deux sont maintenant effectués sur la partie réelle et deux sur la partie imaginaire.

Naturellement, on peut se contenter d'une solution intermédiaire avec, par exemple, un traitement sur le seul signal DOT, avec k=0 ou k=2. Il n'y aura plus besoin alors que d'un seul filtre numérique (en l'occurrence le filtre 78), ce qui est une simplification notable car ce genre de filtre est complexe.

**Revendications**

1. Procédé de radiocommunications du type à accès multiple à répartition par les codes (AMRC) dans lequel :

   - on utilise des codes dits de trafic (CT(1), ..., CT(N)) constitués de séquences d'impulsions ayant un certain rythme, ces codes étant propres aux différents utilisateurs du système, on module ces codes par les informations que chaque utilisateur doit transmettre, et on émet les codes modulés,
   - on reçoit le signal correspondant à tous les codes modulés émis, on effectue une corrélation adaptée aux différents codes, on démodule le signal de corrélation et on restitue les informations transmises,

   ce procédé étant **caractérisé en ce que**, pour permettre à un nouvel utilisateur d'utiliser le procédé :

   - on émet un code particulier prédéterminé, dit code d'accès ($c_{a,\,(j)}$), propre à ce nouvel utilisateur, ce code étant constitué d'une séquence d'impulsions ayant le même rythme que les séquences des codes de trafic, ce code d'accès étant modulé par une suite particulière de symboles,
   - dans le signal reçu, on recherche la présence éventuelle de ces codes d'accès prédéterminés et, en cas de présence d'un tel code, on identifie l'utilisateur et on l'autorise à communiquer.

2. Procédé selon la revendication 1, dans lequel :

   - à l'émission, la modulation pour la transmission d'informations est une modulation de phase à quatre états (QPSK), le signal modulé possédant deux composantes (I,Q) dont l'une (I) est en phase avec une porteuse et l'autre (Q) est en quadrature de phase avec la porteuse,
   - à la réception, on effectue la corrélation sur deux composantes (I, Q) respectivement en phase et en quadrature de phase et on produit deux signaux de corrélation correspondants (CI(n), CQ(n)).

3. Procédé selon la revendication 2, dans lequel:

   - à l'émission, les codes d'accès sont modulés par une suite de symboles dont les phases sont décalées les unes des autres de $k.90°$, où k est égal à 0, 1, 2 ou 3,
   - à la réception, pour rechercher la présence d'un code d'accès on effectue une multiplication retardée conjuguée de deux signaux de corrélation (CI(n), CQ(n)) pour obtenir un signal complexe ayant une composante réelle (DOT) et une composante imaginaire (CROSS), et l'on recherche la présence, sur une durée égale à la durée d'un symbole, d'un pic positif ou négatif, dans au moins l'une des composantes réelle et imaginaire.

4. Procédé selon la revendication 1, dans lequel le code d'accès est modulé par une suite de symboles tous identiques.

5. Procédé selon la revendication 1, dans lequel on corrige chaque signal de corrélation correspondant à un code de trafic pour tenir compte de l'interférence entre ce code de trafic et l'ensemble des codes d'accès présents.

6. Procédé selon la revendication 5, dans lequel on effectue la correction par suppression de la composante continue présente dans le signal à démoduler.

7. Procédé selon la revendication 6, dans lequel on effectue la correction par filtrage passe-haut.

8. Récepteur pour radiocommunications de type à accès multiple à répartition par les codes (AMRC) pour la mise en oeuvre du procédé selon la revendication 1, ce récepteur comprenant :

   - des moyens aptes à recevoir un signal transmis et à délivrer un signal de corrélation adapté aux différents codes de trafic,

- des moyens de démodulation,
- des moyens de restitution de l'information transmise,

ce récepteur étant **caractérisé en ce qu'**il comprend en outre des moyens aptes à détecter la présence, dans le signal reçu, de codes d'accès déterminés ayant même rythme que les séquences des codes de trafic et ayant été modulés par une suite particulière de symboles.

9. Récepteur selon la revendication 8, dans lequel les moyens aptes à détecter la présence, dans le signal reçu, de codes d'accès comprennent :

- un filtre (10) adapté au code d'accès,
- un moyen (12, 60) pour effectuer une multiplication retardée conjuguée,
- un circuit (14, 74, 78) pour extraire la composante réelle et/ou la composante imaginaire du signal délivré par le moyen précédent,
- un filtre (16, 76, 80),
- des moyens (18a, 18b) (82, 84, 86, 88) pour détecter les dépassements, par le signal filtré, d'un seuil prédéterminé et pour positionner ces dépassements et les synchroniser dans une fenêtre temporelle de durée égale à la durée des symboles d'information transmis.

10. Récepteur selon la revendication 8, dans lequel les moyens aptes à détecter la présence dans le signal reçu, de codes d'accès comprennent, pour chaque code d'accès susceptible d'être présent :

- une batterie de corrélateurs $(10_1, ..., 10_N)$ adaptés au code d'accès recherché et décalés l'un par rapport à l'autre d'une durée égale à la durée d'une impulsion des séquences constituant les codes d'accès,
- connectés à la sortie de chaque corrélateur :

  • un moyen $(12_1, ...., 12_N)$ pour effectuer une multiplication retardée conjuguée,
  • un circuit $(14_1, ..., 14_N)$ pour extraire la composante réelle et/ou la composante imaginaire du signal délivré par le moyen précédent,
  • un filtre $(16_1, ..., 16_N)$,

- un moyen (18a, 18b) relié à tous les filtres numériques et apte à détecter les dépassements, par le signal filtré, d'un seuil prédéterminé et pour positionner ces dépassements et les synchroniser dans une fenêtre temporelle de durée égale à la durée (Ts) des symboles d'information transmis.

11. Récepteur selon les revendications 9 ou 10, dans lequel le moyen (12, 72) pour effectuer une multiplication conjuguée traite un signal à deux composantes (CI(n), CQ(n)) et délivre un signal ayant une composante réelle (DOT) et une composante imaginaire (CROSS), les moyens de détection de dépassement comprenant, pour la composante réelle (DOT), des moyens (82, 84) de détection de dépassements de seuils respectivement positif et négatif et, pour la composante imaginaire (CROSS), des moyens (86, 88) de détection de dépassements de seuils respectivement positif et négatif.

**Patentansprüche**

1. CDMA-Funkübertragungsverfahren des Typs mit Vielfachzugriff, bei dem:

- man sogenannte Verkehrscodes (CT(1), ..., CT(N)) benutzt, gebildet durch Impulssequenzen mit einem bestimmten Takt, wobei diese Codes den verschiedenen Benutzern des Systems eigen sind, man diese Codes durch die Informationen, die jeder Benutzer übertragen muss, moduliert und man die modulierten Codes überträgt,
- man das allen gesendeten modulierten Codes entsprechende Signal empfängt, man eine an die verschiedenen Codes angepasste Korrelation durchführt, man das Korrelationssignal demoduliert und man die übertragenen Informationen ausgibt,

wobei dieses Verfahren **dadurch gekennzeichnet ist, dass**, um einem neuen Benutzer zu ermöglichen, das Verfahren zu benutzen:

- man einen vorher festgelegten speziellen Code ($C_{a.(j)}$), Zugriffscode genannt, ausgibt b$_{zw}$. aussendet, der charakteristisch ist für diesen neuen Benutzer, wobei dieser Code durch eine Impulssequenz gebildet wird, die denselben Takt hat wie die Sequenzen der Verkehrscodes, und dieser Zugriffscode durch eine spezielle Folge von Symbolen moduliert wird,
- man in dem empfangenen Signal das eventuelle Vorhandensein dieser vorher festgelegten Zugriffscodes sucht, und man bei Vorhandensein eines solchen Codes den Benutzer identifiziert und ihn ermächtigt, zu kommunizieren.

2. Verfahren nach Anspruch 1, bei dem:

- beim Senden die Modulation für die Informationsübertragung eine Modulation des Typs Quadraturphasenumtastung (QPSK) ist, wobei das modulierte Signal zwei Komponenten (I,Q) besitzt, von denen die eine (I) mit einem Träger phasengleich ist und die andere (Q) zum Träger phasenverschoben ist,
- man beim Empfangen die Korrelation von zwei Komponenten (I,Q), phasengleich beziehungsweise phasenverschoben, durchführt und zwei entsprechende Korrelationssignale (CI(n), CQ(n)) erzeugt.

3. Verfahren nach Anspruch 2, bei dem:

- beim Senden die Zugriffscodes durch eine Folge von Symbolen moduliert werden, deren Phasen um k.90° gegeneinander verschoben sind, wobei k gleich 0, 1, 2 oder 3 ist,
- man beim Empfangen, um nach dem Vorhandensein eines Zugriffscodes zu suchen, eine konjugierte verzögerte Multiplikation von zwei Korrelationssignalen ((CI(N)), CQ(N)) durchführt, um ein komplexes Signal zu erhalten, das eine reelle Komponente (DOT) und eine imaginäre Komponente (CROSS) hat, und man über eine Dauer gleich der Dauer eines Symbols das Vorhandensein einer positiven oder negativen Spitze in wenigstens einer der beiden Komponenten (DOT, CROSS) sucht.

4. Verfahren nach Anspruch 1, bei dem der Zugriffscode durch eine Folge von Symbolen moduliert wird, die alle identisch sind.

5. Verfahren nach Anspruch 1, bei dem man jedes einem Verkehrscode entsprechende Korrelationssignal korrigiert, um der Interferenz zwischen diesem Verkehrscode und der Gesamtheit der vorhandenen Zugriffscodes Rechnung zu tragen.

6. Verfahren nach Anspruch 5, bei dem man die Korrektur durch Unterdrückung der in dem zu demodulierenden Signal vorhandenen Gleichstromkomponente durchführt.

7. Verfahren nach Anspruch 6, bei dem man die Korrektur durch Hochpassfiltern durchführt.

8. CDMA-Funkübertragungsempfänger des Typs mit Vielfachzugriff zur Anwendung des Verfahrens nach Anspruch 1, wobei dieser Empfänger umfasst:

- Einrichtungen zum Empfangen eines übertragenen Signals und zum Liefern eines an die verschiedenen Verkehrscodes angepassten Korrelationssignals,
- Demodulationseinrichtungen,
- Ausgabeeinrichtungen der übertragenen Information,

wobei dieser Empfänger **dadurch gekennzeichnet ist, dass** er außerdem Einrichtungen umfasst, die fähig sind, in dem empfangenen Signal das Vorhandensein von bestimmten Zugriffscodes zu detektieren, die denselben Takt wie die Sequenzen der Verkehrscodes haben und durch eine spezielle Folge von Symbolen moduliert worden sind.

9. Empfänger nach Anspruch 8, bei dem die Einrichtungen zum Detektieren von Zugriffscodes in dem empfangenen Signal umfassen:

- ein Filter (10), angepasst an den Zugriffscode,
- eine Einrichtung (12, 60) zum Durchführen einer konjugierten verzögerten Multiplikation,
- eine Schaltung (14, 74, 78) zum Extrahieren der reellen Komponente und/oder der imaginären Komponente des durch die vorhergehenden Einrichtungen gelieferten Signals,
- ein Filter (16, 76, 80),

- Einrichtungen (18a, 18b) (82, 84, 86, 88), um die Überschreitungen eines vorher festgelegten Schwellenwerts durch das gefilterte Signal zu detektieren und um diese Überschreitungen zu positionieren und in einem Zeitfenster zu synchronisieren, dessen Dauer gleich der Dauer der übertragenen Informationssymbole ist.

**10.** Empfänger nach Anspruch 8, bei dem die Einrichtungen zum Detektieren des Vorhandenseins von Zugriffscodes in dem empfangenen Signal für jeden möglicherweise vorhandenen Zugriffscode umfassen:

- eine Batterie von Korrelatoren ($10_1$, ..., $10_N$), angepasst an den gesuchten Zugriffscode und gegeneinander versetzt um eine Dauer gleich der Dauer eines Impulses der die Zugriffscodes bildenden Sequenzen,
- angeschlossen an den Ausgang jedes Korrelators:

  - eine Einrichtung ($12_1$, ..., $12_N$) zum Durchführen einer konjugierten verzögerten Multiplikation,
  - eine Schaltung ($14_1$, ..., $14_N$) zum Extrahieren der reellen Komponente und/oder der imaginären Komponente des durch die vorhergehende Einrichtung gelieferten Signals,
  - ein Filter ($16_1$, ..., $16_N$),

- eine Einrichtung (18a, 18b), verbunden mit den digitalen Filtern und fähig, die Überschreitungen, durch das gefiltertes Signal, eines vorher festgelegten Schwellenwerts zu detektieren, diese Überschreitungen zu positionieren und sie in einem Zeitfenster zu synchronisieren, dessen Dauer (Ts) gleich der Dauer der übertragenen Informationssymbole ist.

**11.** Empfänger nach den Ansprüchen 9 oder 10, bei dem die Einrichtung zum Durchführen einer konjugierten Multiplikation ein Signal mit zwei Komponenten (CI(n), CQ(n)) verarbeitet und ein Signal liefert, das eine reelle Komponente (DOT) und eine imaginäre Komponente (CROSS) hat, wobei die Einrichtungen zur Überschreitungsdetektion für die reelle Komponente (DOT) Einrichtungen (82, 84) zur Detektion von Überschreitungen von jeweils positiven und negativen Schwellenwerten umfassen und für die imaginäre Komponente (CROSS) Einrichtungen (86, 88) zur Detektion von jeweils positiven und negativen Schwellenwerten.

**Claims**

**1.** A CDMA, Code Division Multiple Access, type radio-communications procedure in which:

- codes called traffic codes (CT(1), ..., CT(N)) are used, formed by sequences of impulses having a certain rate, with these codes belonging to the different users in the system; these codes are modulated by the information that each user must transmit and the modulated codes are transmitted,
- the signal corresponding to all the signals transmitted is received, a correlation is performed adapted to the different codes, the correlation signal is demodulated and the information transmitted is recovered,

  with this procedure being **characterised by** the fact that, in order to allow a new user to use the procedure:

- a predetermined specific code is transmitted, called an access code ($C_{a,\,(j)}$), belonging to this new user, with this code being formed by a sequence of impulses having the same rate as the sequences of the traffic codes, with this access code being modulated by a particular series of symbols,
- the possible presence of these predetermined access codes is scanned for in the signal received and, in the event of the presence of such a code, the user is identified and he is authorised to communicate.

**2.** Procedure according to claim 1, in which:

- when transmitting, the modulation for the data transfer is Quaternary Phase Shift Keying (QPSK), with the modulated signal having two components (I, Q), of which one (I) is in phase with a carrier and the other (Q) is in quadrature phase with the carrier,
- upon reception, the correlation is performed on two components (I, Q), respectively, in phase and in quadrature phase and two corresponding correlation signals are produced (CI(n), CQ(n)).

**3.** Procedure according to claim 2, in which:

- when transmitting, the access codes are modulated by a series of symbols whose phases are spread out between one another by k.90°, where k is equal to 0, 1, 2 or 3,
- upon reception, in order to search for the presence of an access code, a combined delayed multiplication is carried out on two correlation signals (CI(n), CQ(n))in order to obtain a complex signal having one real component (DOT) and one imaginary component (CROSS), and the presence of a positive or negative peak is searched for, over a duration equal to the duration of a symbol, in at least one of the real and imaginary components.

4. Procedure according to claim 1, in which the access code is modulated by a series of symbols which are all identical.

5. Procedure according to claim 1, in which each correlation signal corresponding to a traffic code is corrected in order to take into account the interference between this traffic code and the set of access codes present.

6. Procedure according to claim 5, in which the correction is performed by removing the continuous component present in the signal to be demodulated.

7. Procedure according to claim 6, in which the correction is performed by high-pass filtering.

8. Radio-communications receiver of the CDMA, Code Division Multiple Access, type for implementing the procedure according to claim 1, with this receiver including:

- some appropriate means for receiving a signal transmitted and to deliver a correlation signal adapted to the different traffic codes,
- some means for demodulation,
- some means for the restoration of the information transmitted,

    with this receiver being **characterised by** the fact that it also includes some appropriate means for detecting the presence, in the signal received, of certain access codes having the same
    rate as the sequences of traffic codes and having been modulated by a specific series of symbols.

9. Receiver according to claim 8, in which the appropriate means for detecting the presence, in the signal received, of access codes will include:

- a filter (10) adapted to the access code,
- a means (12, 60) for performing a combined delayed multiplication,.
- a circuit (14, 74, 78) for extracting the real component and/or the imaginary component of the signal delivered by the previous means,
- a filter (16, 76, 80),
- some means (18a, 18b) for detecting the overshoots of a predetermined threshold by the filtered signal, and to position these overshoots and to synchronise them in a time window with a duration equal to the duration of the data symbols transmitted.

10. Receiver according to claim 8, in which the appropriate means for detecting the presence in the signal received of access codes will include, for each access code liable to be present:

- a battery of N correlators ($10_1$, ... $10_N$) adapted to the access code searched for and with one spread with respect to the other over a duration equal to the duration of an impulse from the sequences forming the access codes,
- connected to the output from each correlator:

    a means ($12_1$, ..., $12_N$) to perform a combined delayed multiplication,
    a circuit ($14_1$, ..., $14_N$) to extract the real component and/or the imaginary component of the signal delivered by the preceding means,
    a filter ($16_1$, ..., $16_N$),

- a means (18a, 18b) linked to all the digital filters and suitable for detecting the overshoots, by the filtered signal, of a predetermined threshold and in order to position these overshoots and to synchronise them in a time window with a duration equal to the duration (Ts) of the data symbols transmitted.

**11.** Receiver according claims 9 or 10, in which the means (12, 72) for performing combined multiplication processes a signal with two components (VI(n)), CQ(n) and delivers a signal that has a real component (DOT) and an imaginary component (CROSS), with the means for overshoot detection including, for the real component (DOT), some means (82, 84) for the detection of positive and negative threshold overshoots respectively and, for the imaginary component (CROSS), some means (86, 88) for detecting positive and negative threshold overshoots, respectively.

FIG. 1

FIG. 4

FIG. 2

FIG. 3

EP 1 252 722 B1

FIG. 5

CA(1)    AA    CA(Ka)

AT    TA

CT(1)    TT    CT(N)

FIG. 6

Q

O

I

A

Q

O

O'

I

B

EP 1 252 722 B1

FIG. 7

FIG. 8

EP 1 252 722 B1

CI(n)

CQ(n)

66

68

(DOT + j CROSS)

62

64

60

FIG. 9

FIG. 10

$E_I$ (I) (CI(n)) (DOT) 82 (k=0)

$E_Q$ (Q) (CQ(n)) 84 (k=2)

70 72 74 78

86 (k=1)

(CROSS)

76 80 88 (k=3)

EP 1 252 722 B1